# FASCICULE DE BREVET EUROPEEN

(11) **EP 4 263 997 B1**
(45) Date de publication et mention de la délivrance du brevet: **26.08.2026**
(21) Numéro de dépôt: 21840592.6
(22) Date de dépôt: 17.12.2021
(51) Int. Cl.: E06B 9/68, G01J 1/06, G01J 1/42, H02S 10/20, H02S 40/00

(54) **PROCEDE DE FONCTIONNEMENT D'UN ACTIONNEUR AUTONOME, ACTIONNEUR AUTONOME, PRODUIT PROGRAMME D'ORDINATEUR ET SUPPORT D'ENREGISTREMENT DE DONNÉES.**
VERFAHREN ZUM BETRIEB EINES AUTONOMEN AKTUATORS, AUTONOMER AKTUATOR, COMPUTERPROGRAMMPRODUKT UND DATENSPEICHERMEDIUM
METHOD FOR OPERATING AN AUTONOMOUS ACTUATOR, AUTONOMOUS ACTUATOR, COMPUTER PROGRAM PRODUCT, AND DATA STORAGE MEDIUM

(30) Priorité: 18.12.2020 FR 2013761
(43) Date de publication de la demande: 25.10.2023
(73) Titulaire: Somfy Activites SA, 74300 Cluses (FR)
(72) Inventeur: ROUSSEAU, Fabien, 74300 Cluses (FR); CAVAREC, Pierre-Emmanuel, 74300 Cluses (FR); LEMAITRE, Sébastien, 74300 Cluses (FR); SOURAIN, Rémi, 74300 Cluses (FR)
(74) Mandataire: Novaimo
(86) Numéro de dépôt international: PCT/EP2021/086498
(87) Numéro de publication internationale: WO 2022/129530

(56) Documents cités:
- EP-A1- 3 109 394
- EP-A2- 2 176 491
- CN-U- 201 620 737
- DE-A1- 4 405 163

## Description

L'invention concerne un procédé de fonctionnement d'un actionneur autonome. L'invention porte encore sur un actionneur autonome mettant en œuvre un tel procédé. L'invention porte également sur un programme d'ordinateur mettant en œuvre le procédé mentionné. L'invention porte enfin sur un support d'enregistrement sur lequel est enregistré un tel programme.

Les dispositifs de fermeture, d'occultation ou de protection solaire équipant des fenêtres de bâtiments peuvent être équipés d'un actionneur autonome qui permette une manœuvre motrice du dispositif de fermeture.

Un actionneur autonome est un actionneur non connecté au secteur ou non connecté au secteur de façon permanente. Il dispose d'un moyen de stockage d'énergie pouvant être connecté à une source d'énergie temporairement disponible pour se recharger. La source d'énergie peut être par exemple le réseau de distribution électrique, ou un panneau photovoltaïque. Un tel actionneur est par exemple divulgué par DE4405163 A1.

Afin de maximiser la durée d'autonomie d'un tel actionneur, il est nécessaire de limiter les fonctionnalités de l'actionneur pour minimiser sa consommation d'énergie. Cela implique notamment de limiter la fréquence des ouvertures et fermetures des dispositifs entraînés.

Le but de l'invention est de fournir un procédé de fonctionnement d'un actionneur autonome remédiant aux inconvénients ci-dessus et améliorant les procédés de fonctionnement d'un actionneur autonome connus de l'art antérieur. En particulier, l'invention permet de réaliser un procédé qui soit simple et fiable et qui optimise le fonctionnement d'un actionneur autonome en fonction de l'énergie disponible.

A cet effet, l'invention porte sur un procédé de fonctionnement d'un actionneur autonome pour un dispositif de fermeture, d'occultation, de protection solaire ou d'écran, l'actionneur comprenant un élément de stockage d'énergie électrique, le procédé comprenant :
- une étape de détermination de la présence d'un panneau photovoltaïque de recharge de l'élément de stockage d'énergie électrique,
- une étape de fonctionnement de l'actionneur selon un premier mode de fonctionnement lorsqu'un panneau photovoltaïque de recharge est présent et une étape de fonctionnement de l'actionneur selon un deuxième mode de fonctionnement lorsqu'aucun panneau photovoltaïque de recharge n'est présent,
la consommation d'énergie électrique de l'actionneur autonome dans le premier mode de fonctionnement étant supérieure à la consommation d'énergie électrique de l'actionneur autonome dans le deuxième mode de fonctionnement.

L'étape de détermination peut être mise en œuvre par une action d'un utilisateur sur l'actionneur, notamment par une saisie par l'utilisateur d'un indicateur de présence ou d'absence du panneau photovoltaïque de recharge de l'élément de stockage d'énergie électrique.

L'étape de détermination peut être mise en œuvre par une analyse électrique d'un signal électrique de l'élément de stockage d'énergie électrique.

L'analyse électrique du signal électrique de l'élément de stockage d'énergie électrique peut comprendre une mesure de la tension de l'élément de stockage d'énergie électrique et une comparaison de cette tension à un seuil.

L'analyse électrique du signal électrique de l'élément de stockage d'énergie électrique peut comprendre une analyse de l'évolution de la capacité énergétique de l'élément de stockage d'énergie électrique au fil du temps.

L'analyse électrique du signal électrique de l'élément de stockage d'énergie électrique peut comprendre une mesure de l'intensité d'un courant sur le circuit de recharge du dispositif de stockage d'énergie et une comparaison de cette intensité à un seuil minimum et à un seuil maximum.

L'étape de détermination peut comprendre une analyse de l'état activé ou non activé d'un capteur, tel qu'un contacteur, par le panneau photovoltaïque du fait de sa géométrie ou par l'élément de stockage d'énergie du fait de sa géométrie.

L'actionneur peut comprendre un boîtier muni d'un connecteur pour panneau photovoltaïque, et l'étape de détermination peut être mise en œuvre par détection d'un raccordement d'un panneau photovoltaïque au connecteur du boîtier.

Sur une durée de fonctionnement donnée, le premier mode de fonctionnement peut comprendre plus d'actionnements automatiques d'un dispositif de fermeture, d'occultation, de protection solaire ou d'écran que n'en comprend le deuxième mode de fonctionnement, sur la durée de fonctionnement donnée.

Le premier mode de fonctionnement peut comprendre des actionnements automatiques d'un dispositif de fermeture, d'occultation, de protection solaire ou d'écran afin gérer le confort thermique et/ou le confort visuel dans un bâtiment,
le deuxième mode de fonctionnement ne comprenant pas d'actionnement automatique du dispositif de fermeture, d'occultation, de protection solaire ou d'écran afin gérer le confort thermique et/ou le confort visuel dans un bâtiment.

Le premier mode de fonctionnement peut comprendre une étape de sélection d'une vitesse d'actionnement d'un dispositif de fermeture, d'occultation, de protection solaire ou d'écran,
le deuxième mode de fonctionnement ne comprenant pas d'étape de sélection d'une vitesse d'actionnement du dispositif de fermeture, d'occultation, de protection solaire ou d'écran.

L'actionneur peut comprendre un élément de communication de type émetteur-récepteur,
- le premier mode de fonctionnement pouvant comprendre une activation d'une fonction de répétition de signaux par l'élément de communication,
- le deuxième mode de fonctionnement ne comprenant pas d'activation de la fonction de répétition de signaux par l'élément de communication.

L'invention porte en outre sur un actionneur autonome comprenant des éléments matériels et/ou logiciels mettant en œuvre le procédé tel que défini précédemment.

L'invention porte de plus sur un produit programme d'ordinateur comprenant des instructions de code de programme enregistrées sur un support lisible par ordinateur pour mettre en œuvre les étapes du procédé tel que défini précédemment lorsque ledit programme fonctionne sur un ordinateur ou produit programme d'ordinateur téléchargeable depuis un réseau de communication et/ou enregistré sur un support de données lisible par un ordinateur et/ou exécutable par un ordinateur, le produit programme d'ordinateur comprenant des instructions qui, lorsque le programme est exécuté par l'ordinateur, conduisent celui-ci à mettre en œuvre le procédé tel que défini précédemment.

L'invention porte également sur un support d'enregistrement de données, lisible par un ordinateur, sur lequel est enregistré un programme d'ordinateur comprenant des instructions de code de programme de mise en œuvre du procédé tel que défini précédemment ou support d'enregistrement lisible par ordinateur comprenant des instructions qui, lorsqu'elles sont exécutées par un ordinateur, conduisent celui-ci à mettre en œuvre le procédé tel que défini précédemment.

L'invention porte aussi sur un signal d'un support de données, portant le produit programme d'ordinateur tel que défini précédemment.

Le dessin annexé représente, à titre d'exemple, un mode de réalisation d'un dispositif de fonctionnement selon l'invention et un mode d'exécution d'un procédé de fonctionnement selon l'invention.
[Fig. 1] La figure 1 est une vue en coupe d'un mode de réalisation d'un dispositif d'occultation équipé d'un actionneur.
[Fig. 2] La figure 2 est une vue en perspective d'un mode de réalisation du dispositif d'occultation équipé d'un actionneur.
[Fig. 3] La figure 3 est une vue schématique d'un mode de réalisation du dispositif d'occultation.
[Fig. 4] La figure 4 est une vue schématique d'un mode de réalisation du dispositif d'occultation non raccordé à un panneau photovoltaïque.
[Fig. 5] La figure 5 est une vue schématique un mode de réalisation du dispositif d'occultation raccordé à un panneau photovoltaïque.
[Fig. 6] La figure 6 représente un ordinogramme d'un mode d'exécution d'un procédé de fonctionnement.

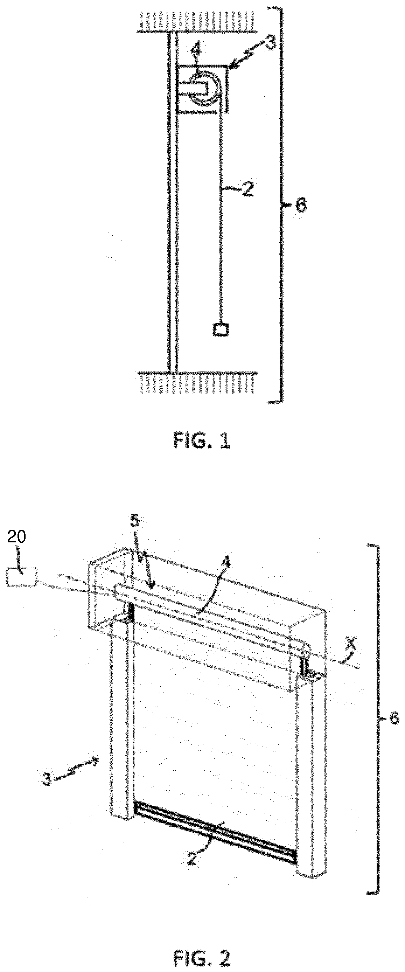

Un exemple d'un dispositif de fermeture, d'occultation ou de protection solaire 3, équipé d'un mode de réalisation d'un appareil électrique autonome 10 est décrit ci-après en référence aux figures 1 à 3. Dans la suite du document, l'appareil électrique autonome est un actionneur.

En effet, l'appareil électrique autonome 10 permet d'entraîner un élément mobile ou écran du dispositif de fermeture, d'occultation ou de protection solaire 3.

On décrit tout d'abord, en référence aux figures 1 et 2, une installation 6 conforme à l'invention et installée dans un bâtiment B comportant une ouverture 1, fenêtre ou porte, équipée de l'écran 2 appartenant à un dispositif de fermeture, d'occultation ou de protection solaire 3, en particulier un store motorisé.

Le dispositif de fermeture, d'occultation ou de protection solaire 3 est par la suite appelé « dispositif d'occultation ». Le dispositif d'occultation 3 comprend l'écran 2.

L'écran 2 peut être un store, notamment une toile, enroulable, un store plissé ou à lames ou un rideau coulissant. Le dispositif d'occultation 3 peut également comprendre un volet roulant. La présente invention s'applique à tous les types de dispositif d'occultation. Dans la suite du document, le terme « écran » est utilisé pour désigner indifféremment les divers modes de réalisation de l'écran 2.

Le dispositif d'occultation 3 comprend un dispositif d'entraînement motorisé 5. Le dispositif d'entraînement motorisé 5 comprend l'actionneur 10. Le dispositif d'entraînement motorisé 5, et plus particulièrement l'actionneur 10, commande le mouvement de l'écran, en fonction d'une position à atteindre par l'écran à l'issue du mouvement, et en fonction d'une vitesse de mouvement.

Le mouvement commandé par l'actionneur 10 peut être de plusieurs natures, selon le type de dispositif d'occultation. Par exemple, le mouvement commandé peut être un mouvement d'enroulement autour d'un tube. Dans ce cas, la vitesse du mouvement de l'écran est fixée par la vitesse de rotation du tube. Le mouvement commandé par le dispositif d'entraînement peut également être un mouvement de rotation de lames d'un store à lames, ou un mouvement de translation, par exemple un mouvement d'entraînement d'un lien souple entraînant en translation un écran tel qu'un rideau, fixé au lien souple.

Dans un mode de réalisation représenté dans les figures 1 et 2, Le dispositif d'occultation 3 comprend en outre un tube d'enroulement 4.

L'écran 2 du dispositif d'occultation 3 est enroulé sur le tube d'enroulement 4. L'écran 2 est mobile entre une position enroulée, en particulier haute, et une position déroulée, en particulier basse.

L'écran 2 du dispositif d'occultation 3 est un écran de fermeture, d'occultation et/ou de protection solaire, s'enroulant et se déroulant autour du tube d'enroulement 4, ce dernier étant entraîné en rotation par l'actionneur 10.

L'actionneur 10 est par exemple de type tubulaire. Le diamètre intérieur du tube d'enroulement 4 est sensiblement supérieur au diamètre externe de l'actionneur 10, de sorte que l'actionneur 10 puisse être inséré dans le tube d'enroulement 4, lors de l'assemblage du dispositif d'occultation 3.

Ainsi, l'actionneur 10 permet de mettre en rotation le tube d'enroulement 4 autour d'un axe de rotation X, de sorte à dérouler ou enrouler l'écran 2 du dispositif d'occultation 3.

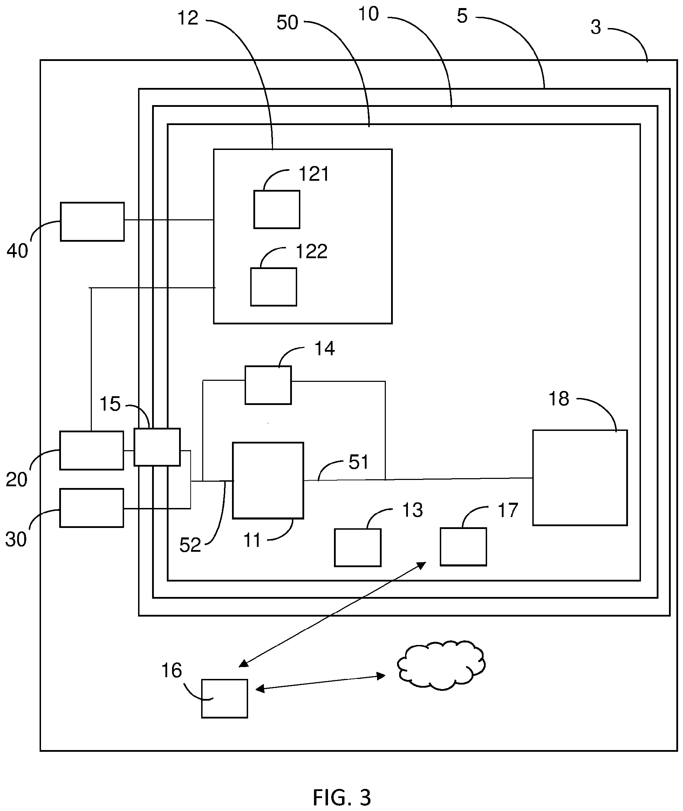

L'actionneur 10, décrit dans la figure 3, comprend un mécanisme d'entraînement 18 décrit ci-après.

Le mécanisme d'entraînement 18 comprend un moteur électrique comprenant lui-même un rotor et un stator, positionnés de manière coaxiale autour de l'axe de rotation X, qui est également l'axe de rotation du tube d'enroulement 4 en configuration montée du dispositif d'entraînement motorisé 5.

Avantageusement, le mécanisme d'entraînement 18 comprend également un réducteur et un arbre de sortie.

Avantageusement, le réducteur comprend au moins un étage de réduction. L'étage de réduction peut être un train d'engrenages de type épicycloïdal.

Le type et le nombre d'étages de réduction du réducteur ne sont pas limitatifs.

Avantageusement, le dispositif d'entraînement 18 comprend également un frein. A titre d'exemples nullement limitatifs, le frein peut être un frein à ressort, un frein à came ou un frein électromagnétique.

L'actionneur 10 comprend un carter, en particulier tubulaire, non représenté dans les figures. Ici, le carter de l'actionneur 10 est de forme cylindrique, notamment de révolution.

Avantageusement, le moteur électrique, le réducteur et, éventuellement, le frein sont disposés à l'intérieur du carter de l'actionneur 10.

Le tube d'enroulement 4 est entraîné en rotation autour de l'axe de rotation X et du carter de l'actionneur 10.

Ainsi, le tube d'enroulement 4 entraîne en rotation l'écran 2 du dispositif d'occultation 3, de sorte à ouvrir ou fermer l'ouverture 1.

L'actionneur 10 comprend un élément de stockage d'énergie 11, qui peut être un ensemble de piles électrochimiques 111, ou une batterie rechargeable sur secteur 112, ou encore une batterie rechargeable par panneau photovoltaïque 112. L'élément de stockage d'énergie 11 est placé dans un logement d'alimentation 19 équipant le carter de l'actionneur 10, autrement dit l'élément de stockage peut être intégré dans le carter de l'actionneur. Alternativement, l'élément de stockage est extérieur au carter de l'actionneur.

Dans un mode de réalisation préférentiel, la batterie rechargeable sur secteur 112 n'est pas branchée directement sur le secteur mais via une électronique de recharge, elle-même branchée sur le secteur.

L'élément 11 de stockage d'énergie, notamment la batterie rechargeable sur secteur 112, peut être relié temporairement au réseau de distribution électrique 30 fournissant du courant alternatif, notamment lorsque la charge de l'élément de stockage n'est plus suffisante pour alimenter le moteur électrique. Cette liaison temporaire est généralement retirée lorsque l'élément de stockage a atteint un état de charge suffisant.

L'élément 11 de stockage d'énergie, notamment, la batterie rechargeable par panneau photovoltaïque 112, peut être relié à un module photovoltaïque 20. Le module photovoltaïque peut être disposé sur le carter de l'actionneur, ou préférentiellement sur un mur extérieur proche de l'actionneur 10. Le module photovoltaïque 20 comprend un panneau photovoltaïque. Le module photovoltaïque 20 comprend des moyens de mesure de l'ensoleillement. Le module photovoltaïque 20 peut comprendre des moyens de mesure de l'incidence des rayons lumineux directs sur le panneau photovoltaïque. Le module photovoltaïque 20 peut comprendre des moyens de mesure de la température dans l'environnement du panneau photovoltaïque

L'actionneur 10 comprend de préférence un calculateur 12 équipé d'un microprocesseur 121 et d'une mémoire 122.

L'actionneur 10 peut comprendre en outre les constituants optionnels suivants :
- un capteur mécanique 13 positionné sur le logement d'alimentation 19 du carter, et/ou
- un équipement électronique 14 apte à effectuer des mesures de tension et d'intensité d'un courant ainsi que des mesures de charge d'un élément de stockage d'énergie, et/ou
- un capteur 15 disposé sur un connecteur du carter de l'actionneur, le connecteur étant destiné à un raccordement de l'actionneur 10 au module photovoltaïque 20,
- une interface homme-machine 16, et/ou
- un élément de communication 17.

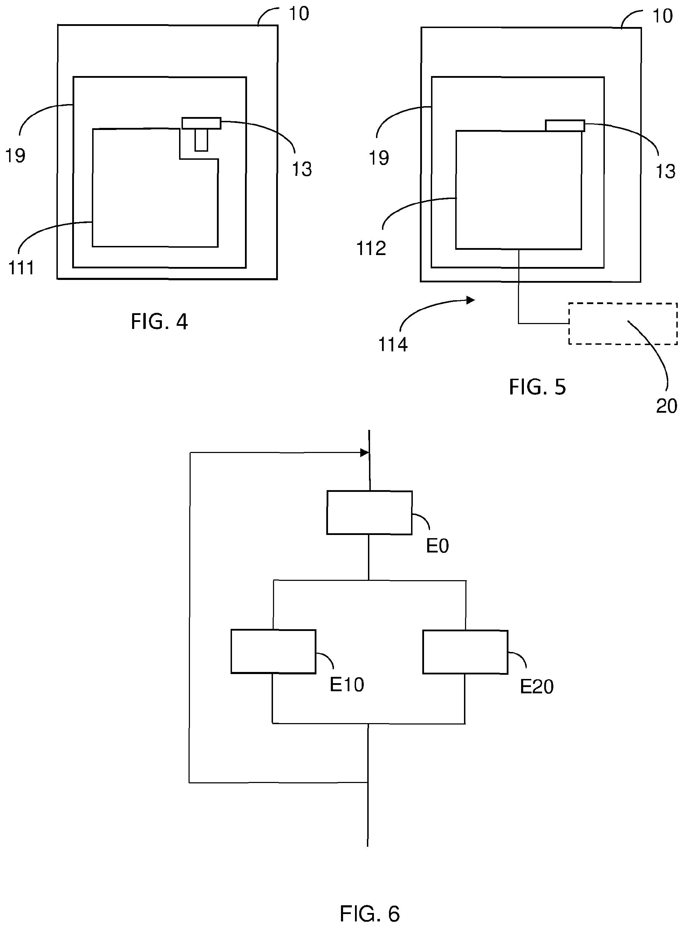

Dans un mode de réalisation représenté dans les figures 4 et 5, le logement d'alimentation 19 comprend un capteur mécanique 13.

Le logement 19 est prévu pour recevoir un élément de stockage d'énergie 11, qui peut être un ensemble de piles électrochimiques 111 (non rechargeable), ou une batterie 112 rechargeable sur secteur, ou un ensemble photovoltaïque 114 comprenant un panneau photovoltaïque 20 et une batterie 112 rechargeable par le panneau photovoltaïque.

Dans le mode de réalisation illustré dans la figure 4, le logement 19 est défini de sorte à ce qu'un ensemble de piles électrochimiques 111 puisse s'insérer dans le logement 19 sans actionner le capteur mécanique 13. En principe, les piles électrochimiques du commerce sont insérées à l'unité dans le logement 19, sans boîtier ou enveloppe particuliers. A l'inverse, comme illustré dans la figure 5, le logement 19 est défini de sorte à ce qu'une batterie rechargeable actionne ou active le capteur mécanique 13 lorsqu'un tel ensemble est inséré dans le logement 19. On considèrera ici que des batteries rechargeables à distance, c'est-à-dire ayant une forme similaire à des piles électrochimiques et qui nécessitent d'être déplacées, avec rupture de la liaison électrique avec l'actionneur, pour permettre leur recharge, seront assimilées à des piles électrochimiques.

Par exemple, la forme de la batterie rechargeable sur secteur ou par panneau photovoltaïque 112 peut présenter une forme particulière en regard du capteur 13, de sorte à activer ledit capteur 13. Alternativement, c'est une enveloppe particulière enserrant une ou plusieurs batteries rechargeables qui présente une forme adaptée à activer le capteur 13 lors de l'insertion de l'élément de stockage d'énergie sous forme de batteries rechargeables.

Ainsi, du fait de sa géométrie, le logement 19 équipé du capteur 13, et les éléments de stockage d'énergie 111, 112 collaborent de sorte que :
- le capteur mécanique 13 est activé lorsque l'élément de stockage d'énergie comprend des batteries rechargeables par le biais du secteur ou par un panneau photovoltaïque 20,
- le capteur mécanique 13 est désactivé lorsque l'élément de stockage d'énergie comprend des piles électrochimiques ou des batteries rechargeables à distance qu'aucun panneau photovoltaïque n'est monté sur l'actionneur.

Alternativement, le capteur 13 pourrait être activé par le biais de la présence d'un panneau photovoltaïque monté sur le carter de l'actionneur.

Dans un mode de réalisation, le carter de l'actionneur 10 comprend un connecteur permettant de raccorder le module photovoltaïque 20 à l'actionneur 10. Un capteur 15 placé sur ledit connecteur est apte à détecter la présence d'un raccordement de l'actionneur 10 à un module photovoltaïque 20.

Dans un mode de réalisation, l'équipement électronique 14 est apte à mesurer l'intensité du courant en entrée ou en sortie de l'élément de stockage 11. En complément ou alternativement, l'équipement électronique 14 permet de mesurer l'évolution temporelle de la tension aux bornes de l'élément de stockage 11. Ceci permet de déduire la nature de l'élément de stockage d'énergie 11 et/ou d'un éventuel raccordement à un panneau photovoltaïque ou au secteur.

Dans un mode de réalisation, l'actionneur 10 comprend également un élément de communication 17 fournissant les moyens de mise en œuvre d'une liaison de communication filaire ou sans fil entre l'actionneur 10 et un ou plusieurs équipements. L'élément de communication 17 peut par exemple mettre en œuvre une liaison radio, en particulier Bluetooth^{®}, permettant de communiquer avec un terminal mobile. Alternativement, l'élément de communication 17 peut comprendre par exemple un récepteur infrarouge permettant au calculateur 12 de recevoir des consignes d'un utilisateur, notamment des consignes émises par l'intermédiaire d'une télécommande. En complément ou alternativement, l'élément de communication 17 peut comprendre un émetteur et un récepteur d'ondes radio. Dans un mode de réalisation, l'émetteur et le récepteur radio peuvent permettre à l'actionneur 10 de constituer un nœud de communication dans un réseau de communication. Dans un mode de réalisation mettant notamment en œuvre des répétitions de message à l'attention d'autres nœuds de communication, le réseau de communication ainsi mis en œuvre est de type mesh.

L'actionneur 10 peut comprendre une interface homme machine 16 permettant le paramétrage de l'actionneur 10 par un utilisateur du dispositif d'occultation 3. Dans un mode de réalisation, l'interface homme machine 16 peut permettre de renseigner manuellement les conditions d'utilisation définies par l'utilisateur, comprenant tout ou partie des paramètres de configuration suivants :
- une vitesse de déplacement de l'écran associé à l'actionneur 10,
- la présence d'un raccordement de l'actionneur 10 à un module photovoltaïque,
- un ou plusieurs seuils de charge de l'élément de stockage d'énergie.

Dans une version minimale, l'interface homme machine 16 peut être réalisée par une télécommande permettant un paramétrage de l'actionneur 10. Dans une version plus avancée, l'interface homme-machine 16 peut être réalisée par l'intermédiaire d'un terminal mobile distinct de l'actionneur 10 et disposant de moyens de récupération et/ou transmission des paramètres de configuration et de moyens permettant à un utilisateur de visualiser et/ou de modifier les paramètres de configuration. Le terminal mobile permet de manière plus générale d'interagir avec le microprocesseur 12 de l'actionneur 10 via des moyens de communications appropriés -fournis par l'élément de communication 17-, tels qu'une liaison de communication filaire ou sans fil, par exemple Bluetooth^{®}.

L'interface homme-machine 16 peut également être réalisée par l'intermédiaire d'un navigateur internet chargé sur le terminal mobile, tel qu'un smartphone ou un ordinateur permettant d'interagir avec le microprocesseur 12 via un serveur internet.

Dans des modes de réalisation alternatifs -en particulier des modes de réalisation dans lesquels le carter de l'actionneur 10 serait au moins partiellement accessible à l'utilisateur-, l'interface homme machine 16 pourrait être réalisée par un écran tactile disposé sur le carter de l'actionneur 10.

Dans un mode de réalisation, des capteurs de position 40 permettent à l'actionneur 10 de connaitre la position courante de l'écran 2. Les capteurs de position peuvent par exemple être placés sur des rails latéraux guidant les bords latéraux de l'écran 2 associé à l'actionneur 10. Les capteurs de position peuvent également être des capteurs internes, comme par exemple des compteurs temporels, des codeurs de positions ou des capteurs de tension ou de courant.

Le calculateur 12, et particulièrement le microprocesseur 121, comprend principalement les modules suivants :
- un premier module de détermination de la présence d'un panneau photovoltaïque 20, le premier module pouvant coopérer avec les capteurs 13 et 15, l'équipement électronique 14 et l'interface homme machine 16,
   et
- un deuxième module de sélection entre un premier mode de fonctionnement et un deuxième mode de fonctionnement, le deuxième module pouvant coopérer avec le mécanisme d'entraînement 18, l'interface homme-machine 16, l'élément de communication 17, éventuellement le module photovoltaïque 20 et des capteurs additionnels 40.

La mémoire 122 peut stocker les valeurs par défaut des paramètres de fonctionnement de l'actionneur 10, correspondant au paramétrage associé au premier et au deuxième mode de fonctionnement. La mémoire 122 peut également stocker les mesures effectuées par l'équipement électronique 14, notamment les mesures des capteurs 13, 15, 40.

Un mode d'exécution du procédé de fonctionnement de l'actionneur 10 est décrit ci-après en référence à la figure 6. Le procédé de fonctionnement peut aussi être vu comme étant un procédé de fonctionnement d'un actionneur ou comme un procédé de fonctionnement d'une installation domotique équipée d'un actionneur. Le mode d'exécution du procédé comprend trois étapes E0, E10, E20 qui vont être détaillées par la suite. Comme illustré sur la figure 6, l'étape E0 est suivie soit d'une étape E10, soit d'une étape E20.

Dans une première étape E0, on détermine la présence d'un panneau photovoltaïque 20 de recharge de l'élément de stockage d'énergie électrique 11.

Un premier mode de détermination, complémentaire ou alternatif aux autres modes de détermination, est mis en œuvre par une action d'un utilisateur sur l'actionneur, notamment par une saisie par l'utilisateur d'un indicateur de présence ou d'absence d'un panneau photovoltaïque de recharge de l'élément de stockage d'énergie électrique.

Autrement dit, ce mode consiste à utiliser une information fournie par l'utilisateur ou l'installateur de l'installation domotique, lorsque cette information est disponible. A cet effet, l'étape E0 peut comprendre une sous étape de stockage de la nature de l'élément de stockage d'énergie 11 dans la mémoire 122. La nature de l'élément de stockage d'énergie 11 peut consister par exemple en une information distinguant les piles électrochimiques des batteries rechargeables et/ou la constitution des batteries rechargeables, par exemple au lithium-ion (Li-lon) ou au nickel-métal hydrure (NiMH). Pour renseigner cette donnée l'utilisateur peut disposer d'un moyen mettant en œuvre une interface homme machine plus ou moins sophistiquée. Alternativement, cette information peut être déterminée automatiquement, par une analyse, notamment une analyse électrique, de l'élément de stockage d'énergie 11.

Dans une variante simplifiée, l'utilisateur peut utiliser une télécommande utilisant une technologie infrarouge ou radio, en particulier Bluetooth.

Dans une variante plus élaborée du premier mode de détermination, l'utilisateur peut renseigner cette information en utilisant des moyens informatiques, comme par exemple une page accessible sur internet via un logiciel de navigation sur internet. Dans ce cas, la mise à jour de cette donnée dans la mémoire 122 sera activée par une action de l'utilisateur sur ladite page internet. Cette variante du premier mode de détermination requiert la mise en œuvre de moyens de communication entre l'actionneur 10 et un ordinateur ou un smartphone.

Dans une autre variante simplifiée, un utilisateur agit sur un commutateur de l'actionneur, comme un microcontact, pour indiquer l'information de connexion ou non connexion à un panneau photovoltaïque.

Dans un deuxième mode de réalisation de l'étape E0, complémentaire ou alternatif aux autres modes de réalisation, la présence ou l'absence d'un raccordement d'un panneau photovoltaïque à l'élément de stockage peut être déterminée par détection, grâce au capteur 15, d'un raccordement d'un panneau photovoltaïque au connecteur du boîtier 50. Le capteur 15 est disposé au niveau d'un connecteur du carter de l'actionneur 10 et détecte la présence d'un raccordement du connecteur à un panneau photovoltaïque. Il peut s'agit d'un capteur mécanique de présence ou d'absence de connexion au niveau d'une fiche de connexion ou d'un capteur électrique.

Dans un troisième mode de réalisation de l'étape E0, complémentaire ou alternatif aux autres modes de réalisation, la détermination est mise en œuvre mécaniquement, notamment mise en œuvre par analyse de l'état activé ou non activé d'un capteur 13, tel qu'un contacteur, par le panneau photovoltaïque 20, du fait de sa géométrie, ou par l'élément de stockage d'énergie électrique 11, du fait de sa géométrie, puis par une analyse complémentaire permettant de déduire, lorsque l'élément de stockage d'énergie 11 est adapté, la présence ou non d'un panneau photovoltaïque.

En d'autres termes, la présence ou l'absence d'un raccordement d'un panneau photovoltaïque à l'élément de stockage d'énergie est définie par un indicateur à deux états, indiquant la présence ou l'absence d'un panneau photovoltaïque 20 relié à l'actionneur 10 du dispositif d'occultation 3.

Ainsi, si l'indicateur confirme une présence, l'actionneur 10 sera déterminé comme étant alimenté par un dispositif de stockage d'énergie 112 raccordé à un panneau photovoltaïque. A l'inverse, si l'indicateur confirme une absence, l'actionneur 10 sera déterminé comme n'étant pas alimenté par un dispositif de stockage d'énergie 112 raccordé à un panneau photovoltaïque.

Un quatrième mode de réalisation de l'étape E0, complémentaire ou alternatif aux autres modes de réalisation, est mis en œuvre par une analyse électrique d'un signal électrique d'alimentation de l'actionneur 10.

L'analyse électrique du signal électrique d'alimentation de l'actionneur 10 peut comprendre une mesure et une comparaison de la tension d'alimentation à un seuil. Notamment, l'analyse électrique peut porter sur la tension du signal électrique 51 produit en sortie de l'élément de stockage d'énergie 11.

L'analyse électrique du signal électrique d'alimentation de l'actionneur 10 peut complémentairement ou alternativement comprendre une analyse de l'évolution de la capacité énergétique du dispositif d'alimentation au fil du temps, notamment une analyse de l'historique des tensions mesurées aux bornes de l'élément de stockage d'énergie. Lorsqu'une alternance entre des phases de variations positives et des phases de variations négatives de la capacité énergétique et/ou de la tension mesurée aux bornes de l'élément de stockage d'énergie est observée, l'élément de stockage d'énergie sera déterminé comme étant raccordé à un panneau photovoltaïque. A l'inverse, en l'absence de cette alternance entre des phases de variations positives et des phases de variations négatives, l'élément de stockage d'énergie sera déterminé comme n'étant pas raccordé à un panneau photovoltaïque.

L'analyse électrique du signal électrique d'alimentation de l'actionneur 10 peut complémentairement ou alternativement comprendre une mesure de l'intensité sur le circuit de recharge 52 du dispositif de stockage d'énergie, notamment l'intensité d'un courant au niveau d'une résistance dite résistance de shunt en série avec l'élément de stockage d'énergie 11 connectant le panneau photovoltaïque 20 à l'élément de stockage d'énergie 11 et une comparaison de cette intensité à un seuil minimum Imin et à un seuil maximum Imax.

Ainsi,
- si l'intensité mesurée sur le circuit de recharge 52 est strictement comprise entre les seuil Imin et Imax, l'actionneur 10 sera déterminé comme étant raccordé à un panneau photovoltaïque,
- si l'intensité mesurée sur le circuit de recharge 52 est inférieure ou égale au seuil Imin, ou supérieure ou égale au seuil Imax, l'actionneur 10 sera déterminé comme n'étant pas alimenté par un dispositif de stockage d'énergie 112 raccordé à un panneau photovoltaïque.

Dans un mode de réalisation, le seuil Imin est égal à 0mA et le seuil Imax est égal à 500mA.

Suite à l'étape E0, on enchaîne sur une étape de sélection d'un mode de fonctionnement en fonction de l'indicateur de présence ou d'absence d'un panneau photovoltaïque alimentant l'élément de stockage d'énergie.

En conséquence de cette sélection, on met en œuvre :
- une étape E10 de fonctionnement de l'appareil selon un premier mode de fonctionnement lorsqu'un panneau photovoltaïque de recharge est présent, ou
- une étape E20 de fonctionnement de l'appareil selon un deuxième mode de fonctionnement lorsqu'aucun panneau photovoltaïque de recharge n'est présent.

Avantageusement, on reboucle ensuite sur l'étape E0. En conséquence, la déconnexion d'un panneau photovoltaïque de l'actionneur, alors que celui-ci est dans le premier mode de fonctionnement provoque le passage au deuxième mode de fonctionnement.

Les étapes E10 et E20 sont deux modes distincts de fonctionnement de l'actionneur 10, la consommation d'énergie électrique globale par l'actionneur autonome dans le premier mode de fonctionnement -mis en œuvre dans l'étape E10- étant supérieure à la consommation d'énergie électrique globale par l'actionneur l'appareil électrique autonome dans le deuxième mode de fonctionnement -mis en œuvre dans l'étape E20-. Cette consommation est déterminée pour une durée de fonctionnement donnée, par exemple une journée. La consommation peut être exprimée en Watt heure (Wh).

Lorsque l'actionneur 10 n'est pas raccordé à un panneau photovoltaïque 20, le mode de fonctionnement mis en œuvre dans l'étape E20 permet de minimiser la consommation d'énergie de l'actionneur 10, afin d'optimiser sa durée d'autonomie, c'est-à-dire notamment d'espacer les périodes nécessitant un changement de piles ou une connexion manuelle pour une recharge des batteries.

Lorsque l'actionneur 10 est raccordé à un panneau photovoltaïque, le mode de fonctionnement mis en œuvre dans l'étape E10 permet de mettre à profit un apport temporaire chronique d'un surplus d'énergie pour améliorer et/ou étendre les fonctionnalités de l'actionneur 10, par rapport au mode de fonctionnement mis en œuvre dans l'étape E20.

Ainsi, dans la suite du document, le mode de fonctionnement amélioré mis en œuvre dans l'étape E10 pourra être décrit relativement au mode de fonctionnement minimal mis en œuvre dans l'étape E20.

Les étapes E10 et E20 comprennent chacune des actionnements du dispositif d'occultation 3.

Dans le mode de fonctionnement minimal mis en œuvre dans l'étape E20, les ouvertures et fermetures du dispositif d'occultation 3 peuvent être limitées à un ou deux cycles automatiques journaliers. Les paramètres définissant les cycles journaliers mis en œuvre dans l'étape E20 sont stockés dans la mémoire 122. Dans un mode de réalisation, ces paramètres comprennent pour chaque cycle :
- l'heure de déroulement du cycle,
- le déplacement appliqué à l'écran durant le cycle, notamment la position à atteindre par l'écran, et la vitesse de déplacement.

Typiquement, il peut se produire une ouverture automatique le matin à une heure prédéterminée et une fermeture automatique le soir à une autre heure prédéterminée.

Dans le mode de fonctionnement amélioré mis en œuvre dans l'étape E10, les actionnements automatiques du dispositif d'occultation 3 d'occultation peuvent être prévus en plus des actionnements automatiques prévus dans l'étape E20. Ces actionnements automatiques supplémentaires sont adaptés à la gestion du confort thermique et/ou du confort visuel dans un bâtiment, c'est-à-dire qu'ils sont destinés à une telle gestion.

Autrement dit, le premier mode de fonctionnement comprend des actionnements automatiques du dispositif de d'occultation afin gérer le confort thermique et/ou le confort visuel dans le bâtiment, et le deuxième mode de fonctionnement ne comprend pas d'actionnement automatique du dispositif d'occultation afin gérer le confort thermique et/ou le confort visuel dans le bâtiment.

A cet effet, l'étape E10 peut comprendre l'activation, la mise en œuvre et la désactivation d'un algorithme de confort thermique. Dans la suite du document, l'algorithme de confort thermique est désigné par le terme « premier algorithme ».

Préférentiellement, l'activation du premier algorithme est corrélée à des périodes de fort ensoleillement qui, d'une part, génèrent une quantité d'énergie photovoltaïque très importante et, d'autre part, correspondent à un besoin accru de gestion du confort thermique.

Dans un mode de réalisation, l'activation et/ou la désactivation du premier algorithme pourrait dépendre de tout ou partie des paramètres suivants fournis par le module photovoltaïque 20 :
- le niveau d'ensoleillement mesuré dans l'environnement du module photovoltaïque 20,
- la température mesurée dans l'environnement du module photovoltaïque 20.

En complément ou alternativement, l'activation et/ou la désactivation premier algorithme peut être conditionnée par le niveau de charge de l'élément de stockage d'énergie, mesuré par l'équipement électronique 14.

L'activation du premier algorithme pourrait dépendre de la comparaison du niveau d'ensoleillement et/ou de la température et/ou du niveau de charge de l'élément de stockage d'énergie à des seuils minimum dits seuils d'activation du premier algorithme.

De plus, la désactivation du premier algorithme pourrait dépendre de la comparaison du niveau d'ensoleillement et/ou de la température et/ou du niveau de charge de l'élément de stockage d'énergie à des seuils minimum dits seuils de désactivation du premier algorithme.

Avantageusement, les seuils de désactivation du premier algorithme sont strictement inférieurs aux seuils d'activation du premier algorithme. La marge entre ces deux seuils est définie se sorte à favoriser la réactivité et la stabilité du procédé de fonctionnement :
- une marge faible favorise la réactivité du procédé dans la gestion de l'activation et la désactivation de l'algorithme, mais peut entrainer une instabilité de l'état de l'algorithme,
- une marge élevée favorise la stabilité de l'état -activé ou non activé- de l'algorithme, mais limite la réactivité de la transition entre ces deux états.

Le premier algorithme comprend un traitement cyclique ou périodique comprenant les sous-étapes suivantes :
- une première sous-étape de réception de mesures provenant de capteurs,
- une première sous étape de détermination d'une position cible pour l'écran associé à l'actionneur 10,
- optionnellement, une première sous-étape de commande du mécanisme d'entraînement 18.

Dans un mode de réalisation du premier algorithme, la fréquence les ouvertures et fermetures du dispositif d'occultation 3 selon l'étape E10 peut être par exemple dix fois supérieure à la fréquence des ouvertures et fermetures du dispositif d'occultation 3 selon l'étape E20. Ce facteur multiplicatif peut même être supérieur à dix, notamment selon la puissance du panneau solaire utilisé, l'orientation de ce panneau solaire, la consommation de l'actionneur en mouvement, et la période de l'année.

L'autorisation d'effectuer des cycles automatiques supplémentaires peut être répartie uniformément sur la phase diurne d'une journée. Alternativement, les cycles peuvent répartis de sorte à être plus fréquents durant une période de la phase diurne, notamment une période de fort ensoleillement et/ou de forte température.

La première sous-étape de réception de mesures provenant de capteurs, peut comprendre une réception de la température et/ou de l'ensoleillement mesurés par le module photovoltaïque 20.

La première sous-étape de réception, peut également comprendre une réception de capteurs 40 de position de l'écran associé à l'actionneur 10.

A partir des données issues de la première sous-étape de réception, on enchaîne sur une première sous-étape de détermination d'une position cible pour l'écran associé à l'actionneur 10.

La détermination d'une position cible peut par exemple prendre en compte la résistance thermique d'une surface de fenêtre couverte par l'écran, comparée à la résistance thermique d'une surface de fenêtre non couverte par l'écran. En complément ou alternativement, la résistance thermique peut prendre en compte la mesure d'ensoleillement. Le différentiel entre la température intérieure et la température extérieure peut également intervenir dans la détermination d'une position cible pour l'écran associé à l'actionneur 10. La température intérieure prise en compte dans la détermination peut être une température intérieure mesurée, ou une température intérieure souhaitée, celle-ci étant définie par configuration, ou variable selon le souhait de l'utilisateur.

En fonction de tout ou partie de ces paramètres, on détermine une position cible pour l'écran associé à l'actionneur 10.

Si l'ouverture ou la fermeture de l'écran associé à l'actionneur 10 correspond à la position cible déterminée, l'actionneur ne commande pas de mouvement de l'écran. On enchaîne alors sur une temporisation dont la durée est égale au temps restant jusqu'au prochain cycle. A l'issue de cette temporisation on reboucle sur la première sous-étape de réception de mesures.

Si l'ouverture ou la fermeture de l'écran associé à l'actionneur 10 ne correspond pas à la position cible déterminée, alors on enchaîne sur une première sous-étape de commande du mécanisme d'entraînement 18.

La première sous-étape de commande comprend un calcul de l'amplitude du mouvement de déplacement à effectuer par le mécanisme d'entraînement 18 pour que l'écran 2 associé à l'actionneur 10 atteigne la position cible.

Le calcul prend en compte la distance à parcourir par l'écran 2 associé à l'actionneur. La distance à parcourir correspond à la distance entre la position courante de l'écran 2 déterminée par les capteurs 40, et la position cible de l'écran 2 calculée dans la première sous-étape de détermination.

L'amplitude du mouvement de déplacement du mécanisme d'entraînement 18 étant ainsi déterminée, dans la première sous-étape de commande, on calcule la durée nécessaire à l'écran pour effectuer son déplacement, à partir d'une valeur de vitesse de déplacement de l'écran qui a été précédemment stockée dans la mémoire 122. Dans un mode de réalisation, la valeur de vitesse est une valeur par défaut. Alternativement, la valeur de vitesse de déplacement aura été préalablement déterminée par l'utilisateur, comme cela sera décrit plus loin dans ce document.

La durée et la vitesse de déplacement ainsi établies sont utilisées pour définir la commande transmise au mécanisme d'entraînement 18. En effet, la commande du mécanisme de transmission est matérialisée par la transmission d'un signal électrique d'alimentation du moteur du mécanisme d'entraînement, le signal électrique étant défini de sorte que :
- la durée du signal électrique corresponde à la durée de déplacement de l'écran, et
- le profil en tension du signal électrique permette d'obtenir la vitesse de déplacement souhaitée.

Après la transmission du signal électrique, on enchaîne sur une temporisation dont la durée est égale au temps restant jusqu'au prochain cycle. A l'issue de la temporisation, on reboucle sur la première sous-étape de réception de mesures.

En plus du premier algorithme précédemment décrit ou alternativement au premier algorithme, l'étape E10 peut comprendre l'activation, la mise en œuvre et la désactivation d'un algorithme de confort visuel, nommé dans la suite du document « deuxième algorithme ».

Le deuxième algorithme peut être vu comme une variante du premier algorithme, dans laquelle le critère principal ne serait pas la température souhaitée à l'intérieur du bâtiment, mais la luminosité souhaitée à l'intérieur du bâtiment.

Préférentiellement, l'activation du deuxième algorithme est corrélée à des périodes de fort ensoleillement qui, d'une part, génèrent une quantité d'énergie photovoltaïque très importante et, d'autre part, correspondent à un besoin accru de gestion du confort visuel.

Dans un mode de réalisation, l'activation et/ou la désactivation du deuxième algorithme pourrait dépendre de tout ou partie des paramètres suivants fournis par le module photovoltaïque 20 :
- le niveau d'ensoleillement mesuré par le module photovoltaïque,
- la direction des rayons lumineux mesurée par le module photovoltaïque.

En particulier l'activation et la désactivation du deuxième algorithme pourrait dépendre de l'angle d'incidence mesuré ou calculé entre les rayons lumineux et la perpendiculaire à un plan formé par l'ouverture équipée du dispositif d'occultation 3. Par exemple, on peut définir pour l'angle d'incidence un seuil minimum et un seuil maximum entre lesquels les rayons lumineux sont susceptibles de traverser directement l'ouverture.

Les seuils minimum et maximum associés à l'incidence peuvent varier pour chaque ouverture, en fonction de son orientation, de sa position, de ses dimensions et des éléments environnementaux susceptibles de masquer le soleil. Avantageusement, les seuils associés à l'incidence sont définis dans une variable de configuration stockée dans la mémoire 122.

En complément ou alternativement, l'activation et/ou la désactivation du premier algorithme peuvent être conditionnées par le niveau de charge de l'élément de stockage d'énergie, mesuré par l'équipement électronique 14.

Ainsi, l'activation du deuxième algorithme pourrait dépendre de la comparaison du niveau d'ensoleillement et/ou de l'incidence des rayons lumineux et/ou du niveau de charge de l'élément de stockage d'énergie à des seuils minimum dits seuils d'activation du deuxième algorithme.

De plus, la désactivation deuxième algorithme pourrait dépendre de la comparaison du niveau d'ensoleillement et/ou de l'incidence des rayons lumineux et/ou du niveau de charge de l'élément de stockage d'énergie à des seuils minimum dits seuils de désactivation du deuxième algorithme.

Avantageusement, les seuils de désactivation du deuxième algorithme sont strictement inférieurs aux seuils d'activation du deuxième algorithme.

Le deuxième algorithme est un traitement cyclique ou périodique comprenant les sous-étapes suivantes :
- une deuxième sous-étape de réception de mesures provenant de capteurs,
- une deuxième sous-étape de détermination d'une position cible pour l'écran associé à l'actionneur 10,
- optionnellement, une deuxième sous-étape de commande du mécanisme d'entraînement 18.

Dans un mode de réalisation du deuxième algorithme, la fréquence des ouvertures et fermetures du dispositif d'occultation 3 selon l'étape E10 peut être dix fois supérieure à la fréquence des ouvertures et fermetures du dispositif d'occultation 3 selon l'étape E20. Ce facteur multiplicatif peut même être supérieur à dix, notamment selon la puissance du panneau solaire utilisé, l'orientation de ce panneau solaire, la consommation de l'actionneur en mouvement, et la période de l'année.

L'autorisation d'effectuer des cycles automatiques supplémentaires peut être répartie uniformément sur la phase diurne d'une journée. Alternativement, les cycles peuvent répartis de sorte à être plus fréquents durant une période de la phase diurne, notamment une période de forte intensité lumineuse, ou plus spécifiquement une phase durant laquelle les rayons du soleil sont dirigés sur l'ouverture associée à l'actionneur.

La deuxième sous-étape de réception de mesures provenant de capteurs peut comprendre une réception de l'ensoleillement et/ou l'incidence des rayons lumineux mesurés dans l'environnement du module photovoltaïque 20. L'orientation spatiale du module photovoltaïque et de la fenêtre pouvant être différentes, la deuxième sous-étape de réception peut comprendre un calcul de l'incidence des rayons lumineux sur la fenêtre, à partir de la valeur d'incidence des rayons lumineux mesurée sur le panneau photovoltaïque.

La deuxième sous-étape de réception, peut également comprendre une réception de données de capteurs 40 de position de l'écran associé à l'actionneur 10.

A partir des données issues de la deuxième sous-étape de réception, on enchaîne sur une deuxième sous-étape de détermination d'une position cible pour l'écran associé à l'actionneur 10.

La détermination d'une position cible peut prendre en compte l'incidence des rayons lumineux sur l'ouverture associée à l'actionneur 10.

La détermination de la position cible de l'écran peut comprendre une détermination de position verticale de l'extrémité inférieure de l'écran.

Selon le type d'écran utilisé, la position cible peut également comprendre un angle d'orientation des lames de l'écran. Dans ce cas, l'angle d'orientation des lames pourrait être déterminé en fonction de l'incidence des rayons lumineux sur l'ouverture associée à l'actionneur 10.

Si la position de l'écran associé à l'actionneur 10 correspond à la position cible déterminée, on enchaîne sur une temporisation dont la durée est égale au temps restant jusqu'au prochain cycle. A l'issue de cette temporisation, on reboucle sur la deuxième sous-étape de réception de mesures.

Si la position de l'écran associé à l'actionneur 10 ne correspond pas à la position cible déterminée, alors on enchaîne sur une deuxième sous-étape de commande du mécanisme d'entraînement 18.

La deuxième sous-étape de commande comprend un calcul du mouvement de déplacement à effectuer par le mécanisme d'entraînement 18 pour que l'écran associé à l'actionneur 10 atteigne la position cible.

Le calcul prend en compte la distance à parcourir par l'au moins un écran associé à l'actionneur. La distance à parcourir correspond à la distance entre la position courante d'un écran déterminée par les capteurs 40, et la position cible de cet écran calculée dans la première sous-étape de détermination.

Selon la nature de l'écran, notamment si l'écran comprend une commande automatique de lames orientables, le calcul prend également en compte le mouvement de déplacement à effectuer par le mécanisme d'entraînement 18 pour orienter les lames selon un angle cible défini dans la deuxième sous-étape de détermination.

L'amplitude du mouvement de déplacement du mécanisme d'entraînement 18 étant ainsi déterminée, dans la deuxième sous-étape de commande on calcule la durée nécessaire à l'écran pour effectuer son déplacement, à partir d'une valeur de vitesse de déplacement de l'écran qui a été précédemment stockée dans la mémoire 122. Dans un mode de réalisation, la valeur de vitesse est une valeur par défaut. Alternativement, la valeur de vitesse de déplacement aura été préalablement déterminée par l'utilisateur, comme cela sera décrit plus loin dans ce document.

La durée et la vitesse de déplacement ainsi établies sont utilisées pour définir la commande transmise au mécanisme d'entraînement 18.

En effet, la commande du mécanisme de transmission est matérialisée par la transmission d'un signal électrique d'alimentation du moteur du mécanisme d'entraînement 18, le signal électrique étant défini de sorte que :
- la durée du signal électrique corresponde à la durée de déplacement de l'écran, et
- le profil en tension du signal électrique permette d'obtenir la vitesse de déplacement ciblée.

Après la transmission du signal électrique au moteur du mécanisme d'entraînement 18, on enchaîne sur une temporisation dont la durée est égale au temps restant jusqu'au prochain cycle. A l'issue de la temporisation, on reboucle sur la deuxième sous-étape de réception de mesures.

En plus des premier et deuxième algorithmes précédemment décrits, l'étape E10 peut comprendre l'activation, la mise en œuvre et la désactivation d'un algorithme de vitesse, nommé dans la suite du document « troisième algorithme ».

Dans le deuxième mode de fonctionnement mis en œuvre à l'étape E20, une valeur par défaut est attribuée à la vitesse de déplacement de l'écran associé à l'actionneur 10. Cette valeur par défaut est définie de sorte à minimiser la consommation énergétique de l'actionneur 10. Il n'est pas possible de sélectionner une autre vitesse de déplacement de l'actionneur.

Dans le premier mode de fonctionnement mis en œuvre à l'étape E10, la mise en œuvre du troisième algorithme permet à un utilisateur de choisir la vitesse de déplacement de l'écran associé à l'actionneur 10. La vitesse choisie par l'utilisateur peut être supérieure ou inférieure à la valeur par défaut.

L'actionneur est dimensionné de sorte que son fonctionnement soit optimum, notamment en termes de rendement, de temps de déplacement de l'écran associé et de production sonore, pour la valeur de vitesse par défaut, sélectionnée dans le deuxième mode de fonctionnement. Ainsi, tout fonctionnement à la vitesse par défaut correspond à une consommation énergétique donnée et à un niveau acceptable de temps de fonctionnement et de bruit. En période d'apports énergétiques externes importants, la vitesse de déplacement des protections solaires peut être sélectionnée en deçà ou au-delà de la valeur par défaut, y compris sélectionnée parmi des vitesses de déplacement plus coûteuses en consommation énergétique du fait notamment d'un moins bon rendement énergétique.

En effet, des vitesses plus faibles génèrent généralement moins de bruit et peuvent être préférées pour limiter les nuisances sonores. A faible vitesse, le rendement de l'actionneur, en particulier de son réducteur, est généralement moins bon qu'à des vitesses plus élevées. Ainsi, le déplacement à vitesse réduite augmente la dépense d'énergie de l'actionneur.

Alternativement, des vitesses plus élevées que la vitesse nominale peuvent être préférées pour diminuer le temps de déplacement de la protection solaire jusqu'à sa position finale souhaitée par l'utilisateur. Ce déplacement à vitesse plus importante peut éventuellement réduire la dépense énergétique au détriment du confort sonore.

Dans le deuxième mode de fonctionnement, le choix de vitesse peut être laissé libre à l'utilisateur.

Complémentairement, l'activation et la désactivation du troisième algorithme peuvent être déterminées par le niveau de charge de l'élément de stockage d'énergie 112 de l'actionneur 10.

Par exemple,
- un troisième seul minimum d'activation peut être appliqué au niveau de charge pour l'activation du troisième algorithme,
- un troisième seul minimum de désactivation peut être appliqué au niveau de charge pour la désactivation du troisième algorithme,
- préférentiellement le troisième seul minimum de désactivation est inférieur au troisième seul minimum d'activation.

La mise en œuvre du troisième algorithme comprend principalement une sélection d'une vitesse saisie par l'utilisateur via une interface homme machine 16. En alternative, une vitesse prédéterminée de minimisation du bruit peut être sélectionnée automatiquement par défaut.

La mise en œuvre du troisième algorithme peut alternativement ou complémentairement comprendre l'activation de retours d'information visuels ou sonores vers l'utilisateur. Les retours d'information peuvent être par exemple des vibrations du dispositif d'entraînement 18 ou de l'écran, ou des déplacements brefs de l'écran.

Dans un mode de réalisation, la vitesse saisie par l'utilisateur est stockée au-delà de la désactivation du troisième l'algorithme.

Autrement dit, la mise en œuvre du procédé de fonctionnement pourrait comprendre,
- une première phase d'activation du troisième algorithme durant laquelle un utilisateur spécifie ou sélectionne une vitesse souhaitée, les déplacements de l'écran s'effectuant alors à la vitesse souhaitée par l'utilisateur,
- une phase de désactivation du troisième algorithme, les déplacements de l'écran s'effectuant alors à la vitesse par défaut,
- une deuxième phase d'activation du troisième algorithme durant laquelle la vitesse de déplacement prend automatiquement ou est automatiquement sélectionnée à la dernière valeur définie par l'utilisateur dans une précédente phase d'activation, c'est-à-dire dans cet exemple la première phase.

Ainsi, l'activation du troisième algorithme pourrait comprendre une récupération en mémoire de la dernière valeur de vitesse souhaitée par l'utilisateur dans une précédente phase d'activation.

L'étape E10 peut comprendre en outre un quatrième algorithme mettant en œuvre la participation de l'actionneur 10 à un réseau de communication.

L'étape E10 comprend avantageusement une activation, une mise en œuvre et une désactivation du quatrième algorithme.

Préférentiellement, l'activation et/ou la désactivation du quatrième algorithme peuvent être complémentairement conditionnées par le niveau de charge de l'élément de stockage d'énergie, mesuré par l'équipement électronique 14, notamment par comparaison du niveau de charge respectivement à un seuil minimum d'activation et un seuil minimum de désactivation.

L'activation du quatrième algorithme comprend une étape d'activation d'un élément de communication 17, notamment l'activation d'un émetteur et d'un récepteur d'ondes radio.

L'activation du quatrième algorithme comprend également, suite à l'étape d'activation de l'élément de communication, une étape de signalisation ou enregistrement, dans laquelle l'actionneur 10 signale sa présence aux autres nœuds de communication du réseau. Dans un mode de réalisation, l'étape de signalisation comprend une émission d'un message contenant une information, de type adresse réseau, permettant d'identifier ultérieurement l'actionneur 10 en tant qu'émetteur et récepteur.

La désactivation du quatrième algorithme comprend l'émission d'un message signalant la désactivation de l'actionneur 10 en tant que nœud du réseau.

En outre, la désactivation du quatrième algorithme comprend préférentiellement la désactivation de l'émetteur l'élément de communication 17. Un récepteur dédié uniquement à la fonction de répétition peut aussi être désactivé. Le récepteur n'est pas désactivé s'il sert aussi à recevoir des signaux (en particulier des ordres) destinés à la commande de manœuvre de l'écran.

La mise en œuvre du quatrième algorithme comprend les sous-étapes suivantes qui peuvent se dérouler en parallèle :
- une étape de répétition des messages reçus,
- éventuellement une étape d'émission d'un message.

Dans l'étape de répétition des messages, on se place en attente de réception d'un message provenant du réseau. Lorsqu'un message arrive, il est retransmis tel quel sur le réseau, s'il n'est pas destiné à l'actionneur 10.

Le quatrième algorithme peut comprendre une étape d'émission d'un message, notamment pour transmettre des mesures effectuées par le module photovoltaïque 20 à d'autres équipements connectés au réseau. L'étape d'émission comprend une étape de formatage pour créer une trame de message contenant les mesures.

Ainsi, l'étape E10 se différencie de l'étape E20 par la mise en œuvre de toute combinaison de l'un, de certains ou de tous les quatre algorithmes, ces derniers étant indépendants les uns des autres.

Quelques fonctions ont été décrites plus haut. Toutefois l'activation de toute autre fonction est envisageable dans le premier mode correspondant à l'étape E10.

Chacun de ces algorithmes comprend ses propres conditions d'activation, le premier critère d'activation demeurant l'absence ou la présence du panneau photovoltaïque 20.

Les conditions d'activation peuvent différer entre les différents algorithmes par la nature des mesures auxquelles elles se rapportent. Par exemple, l'activation du premier algorithme, portant sur le confort thermique, inclut préférentiellement une comparaison d'une température à un seuil minimum, alors que ce critère apparait moins pertinent pour les troisième et quatrième algorithmes.

Préférentiellement, les quatre algorithmes partagent un paramètre commun d'activation et de désactivation, qui est le niveau de charge de l'élément de stockage d'énergie 112. Les seuils d'activation et de désactivation associés à ce paramètre peuvent avoir en commun de dépendre de la constitution des batteries rechargeables, par exemple au lithium-ion (Li-Ion) ou au nickel-métal hydrure (NiMH). Toutefois, les seuils d'activation et de désactivation associées à ce paramètre peuvent différer selon l'algorithme.

Dans un mode de réalisation, les seuils d'activation et de désactivation de chacun des algorithmes pourraient être automatiquement modifiés en fonction du nombre d'algorithmes actifs à un instant donné.

Au final, le procédé de fonctionnement permet d'optimiser le fonctionnement d'un actionneur en fonction de la quantité d'énergie dont l'actionneur dispose.

Lorsque l'actionneur n'est pas raccordé à une source d'énergie photovoltaïque, son fonctionnement est limité de sorte à préserver l'autonomie de l'actionneur.

Dans le cas d'un raccordement à un panneau photovoltaïque, d'autres actions de limitation de la consommation d'énergie peuvent également être mises en place. Ces actions sont tout à fait compatibles avec la mise en œuvre d'un ou plusieurs des algorithmes décrits ci-dessus. La consommation énergétique peut encore être limitée par tout ou partie des actions suivantes :
- mise en mode veille lors de périodes de moindre utilisation, par exemple la nuit (l'information jour/nuit étant fournie par le panneau photovoltaïque en tant que capteur),
- amplification radio par utilisation des câbles de liaison au panneau photovoltaïque, ce qui limite l'utilisation d'un amplificateur électronique et donc la consommation globale,
- gestion d'un mode dégradé lorsque les moyens de stockage d'énergie électrique ont un niveau faible.

Lorsque l'actionneur est raccordé à une source d'énergie photovoltaïque, et préférentiellement lorsque l'ensoleillement est suffisant, son fonctionnement est adapté plus finement aux besoins de l'utilisateur.

Cette adaptation, rendue possible par la disponibilité de la source d'énergie photovoltaïque, est d'autant plus bénéfique qu'elle coïncide avec des périodes de fort ensoleillement, pendant lesquelles l'écran joue un rôle prépondérant sur le confort thermique et le confort visuel d'une pièce.

De plus, dans les périodes de fort ensoleillement, une augmentation de la consommation d'énergie photovoltaïque permet d'éviter les délestages du panneau photovoltaïque.

Par ailleurs, le procédé de fonctionnement permet une meilleure adaptation aux souhaits de l'utilisateur, notamment en offrant plus de fonctionnalités qu'un actionneur autonome traditionnel dans certains cas, tout en restant tout aussi opérationnel qu'un actionneur autonome traditionnel. En effet, l'actionneur fonctionnant dans le premier mode de fonctionnement est parfaitement dimensionné pour que l'installation soit opérationnelle, dans un fonctionnement nominal. Le fonctionnement dans le deuxième mode de réalisation permet un ensemble de gains économiques et fonctionnels par rapport à ce fonctionnement nominal.

Les bénéfices de l'invention ne sont pas imités à la gestion des ouvertures et fermetures des écrans d'une pièce. En effet, en plus d'améliorer le confort thermique et visuel d'une pièce, le procédé de fonctionnement améliore la fiabilité d'un réseau de communication établi entre les différents équipements domotiques. Cette amélioration apportée par l'invention fiabilise ainsi le fonctionnement des autres équipements domotiques raccordés au réseau.

Grâce aux solutions décrites précédemment, il est possible d'améliorer les fonctionnalités d'un actionneur autonome en cours de vie de cet actionneur. Ses fonctionnalités peuvent par exemple être améliorées par le simple fait d'acquérir et de brancher un panneau photovoltaïque sur l'actionneur déjà en service dans une installation. Cette amélioration des fonctionnalités peut intervenir automatiquement, c'est-à-dire suite au branchement d'un panneau photovoltaïque sur l'actionneur et/ou l'installation ou le montage d'un panneau photovoltaïque sur l'actionneur.

Comme vu précédemment, c'est l'état de présence ou d'absence du panneau photovoltaïque de recharge qui détermine le mode de fonctionnement. Autrement dit, de manière avantageuse, l'actionneur autonome est dans le premier mode de fonctionnement si et seulement si le panneau photovoltaïque de recharge est présent, c'est-à-dire raccordé à l'actionneur ou à l'élément de stockage d'énergie électrique de l'actionneur, et l'actionneur autonome est dans le deuxième mode de fonctionnement si et seulement si le panneau photovoltaïque de recharge est absent, c'est-à-dire non raccordé à l'actionneur ou à l'élément de stockage d'énergie électrique de l'actionneur.

## Revendications

1. Procédé de fonctionnement d'un actionneur autonome (10) pour un dispositif (3) de fermeture, d'occultation, de protection solaire ou d'écran, l'actionneur comprenant un élément de stockage d'énergie électrique (11), le procédé comprenant :
- une étape (E0) de détermination de la présence d'un panneau photovoltaïque (20) de recharge de l'élément de stockage d'énergie électrique (11),
- une étape (E10) de fonctionnement de l'actionneur selon un premier mode de fonctionnement lorsqu'un panneau photovoltaïque (20) de recharge est présent et une étape (E20) de fonctionnement de l'actionneur selon un deuxième mode de fonctionnement lorsqu'aucun panneau photovoltaïque de recharge n'est présent, la consommation d'énergie électrique de l'actionneur dans le premier mode de fonctionnement étant supérieure à la consommation d'énergie électrique de l'actionneur dans le deuxième mode de fonctionnement.

2. Procédé de fonctionnement selon la revendication précédente, **caractérisé en ce que** l'étape (E0) de détermination est mise en œuvre par une action d'un utilisateur sur l'actionneur, notamment par une saisie par l'utilisateur d'un indicateur de présence ou d'absence du panneau photovoltaïque (20) de recharge de l'élément de stockage d'énergie électrique (11).

3. Procédé de fonctionnement selon la revendication 1, **caractérisé en ce que** l'étape (E0) de détermination est mise en œuvre par une analyse électrique d'un signal électrique de l'élément de stockage d'énergie électrique (11).

4. Procédé de fonctionnement selon la revendication 3, **caractérisé en ce que** l'analyse électrique du signal électrique de l'élément de stockage d'énergie électrique (11) comprend une mesure de la tension de l'élément de stockage d'énergie électrique (11) et une comparaison de cette tension à un seuil.

5. Procédé de fonctionnement selon l'une des revendications 3 et 4, **caractérisé en ce que** l'analyse électrique du signal électrique de l'élément de stockage d'énergie électrique (11) comprend une analyse de l'évolution de la capacité énergétique de l'élément de stockage d'énergie électrique (11) au fil du temps.

6. Procédé de fonctionnement selon l'une des revendications 3 à 5, **caractérisé en ce que** l'analyse électrique du signal électrique de l'élément de stockage d'énergie électrique (11) comprend une mesure de l'intensité d'un courant sur le circuit de recharge du dispositif de stockage d'énergie et une comparaison de cette intensité à un seuil minimum et à un seuil maximum.

7. Procédé de fonctionnement selon la revendication 1, l'actionneur comprenant un boîtier (50) muni d'un connecteur pour panneau photovoltaïque, **caractérisé en ce que** l'étape de détermination est mise en œuvre par détection d'un raccordement d'un panneau photovoltaïque (20) au connecteur du boîtier (50).

8. Procédé de fonctionnement selon l'une des revendications précédentes, **caractérisé en ce que**, sur une durée de fonctionnement donnée, le premier mode de fonctionnement comprend plus d'actionnements automatiques d'un dispositif (3) de fermeture, d'occultation, de protection solaire ou d'écran que n'en comprend le deuxième mode de fonctionnement, sur la durée de fonctionnement donnée.

9. Procédé de fonctionnement selon l'une des revendications précédentes, **caractérisé en ce que** :
- le premier mode de fonctionnement comprend des actionnements automatiques d'un dispositif (3) de fermeture, d'occultation, de protection solaire ou d'écran afin gérer le confort thermique et/ou le confort visuel dans un bâtiment, et
- le deuxième mode de fonctionnement ne comprend pas d'actionnement automatique du dispositif (3) de fermeture, d'occultation, de protection solaire ou d'écran afin gérer le confort thermique et/ou le confort visuel dans un bâtiment.

10. Procédé de fonctionnement selon l'une des revendications précédentes, **caractérisé en ce que** :
- le premier mode de fonctionnement comprend une étape de sélection d'une vitesse d'actionnement d'un dispositif (3) de fermeture, d'occultation, de protection solaire ou d'écran, et
- le deuxième mode de fonctionnement ne comprend pas d'étape de sélection d'une vitesse d'actionnement du dispositif (3) de fermeture, d'occultation, de protection solaire ou d'écran.

11. Procédé de fonctionnement selon l'une des revendications précédentes, l'actionneur (10) comprenant un élément de communication (17) de type émetteur-récepteur, **caractérisé en ce que** :
- le premier mode de fonctionnement comprend une activation d'une fonction de répétition de signaux par l'élément de communication, et
- le deuxième mode de fonctionnement ne comprend pas d'activation de la fonction de répétition de signaux par l'élément de communication.

12. Actionneur autonome (10), comprenant des éléments (11, 12, 13, 14, 15, 16, 17, 18, 19, 50, 111, 112, 114, 121, 122) matériels et/ou logiciels mettant en œuvre le procédé selon l'une des revendications 1 à 11.

13. Produit programme d'ordinateur comprenant des instructions de code de programme enregistrées sur un support lisible par ordinateur pour mettre en œuvre les étapes du procédé selon l'une quelconque des revendications 1 à 11 lorsque ledit programme fonctionne sur un ordinateur.

14. Support d'enregistrement de données, lisible par un ordinateur, sur lequel est enregistré un programme d'ordinateur comprenant des instructions de code de programme de mise en œuvre du procédé selon l'une des revendications 1 à 11.

## Patentansprüche

1. Verfahren zum Betreiben eines autonomen Aktuators (10) für eine Verschluss-, Verdunkelungs-, Sonnenschutz- oder Abschirmungsvorrichtung (3), wobei der Aktuator ein Elektroenergiespeicherelement (11) umfasst, das Verfahren umfassend:
- einen Schritt (E0) des Bestimmens des Vorhandenseins eines Photovoltaikmoduls (20) zum Aufladen des Elektroenergiespeicherelements (11),
- einen Schritt (E10) des Betreibens des Aktuators in einer ersten Betriebsart, wenn ein Photovoltaikmodul (20) zum Aufladen vorhanden ist, und einen Schritt (E20) des Betreibens des Aktuators in einer zweiten Betriebsart, wenn kein Photovoltaikmodul zum Aufladen vorhanden ist, wobei der Elektroenergieverbrauch des Aktuators in der ersten Betriebsart höher als der Elektroenergieverbrauch des Aktuators in der zweiten Betriebsart ist.

2. Verfahren zum Betreiben nach dem vorhergehenden Anspruch, **dadurch gekennzeichnet, dass** der Schritt (E0) des Bestimmens durch eine Aktion eines Benutzers an dem Aktuator durchgeführt wird, insbesondere durch ein Eingeben eines Indikators für das Vorhandensein oder Nichtvorhandensein des Photovoltaikmoduls (20) zum Aufladen des Elektroenergiespeicherelements (11) durch den Benutzer.

3. Verfahren zum Betreiben nach Anspruch 1, **dadurch gekennzeichnet, dass** der Schritt (E0) des Bestimmens durch eine elektrische Analyse eines elektrischen Signals des Elektroenergiespeicherelements (11) durchgeführt wird.

4. Verfahren zum Betreiben nach Anspruch 3, **dadurch gekennzeichnet, dass** die elektrische Analyse des elektrischen Signals des Elektroenergiespeicherelements (11) ein Messen der Spannung des Elektroenergiespeicherelements (11) und ein Vergleichen dieser Spannung mit einem Schwellenwert umfasst.

5. Verfahren zum Betreiben nach einem der Ansprüche 3 und 4, **dadurch gekennzeichnet, dass** die elektrische Analyse des elektrischen Signals des Elektroenergiespeicherelements (11) eine Analyse des Verlaufs der energetischen Kapazität des Elektroenergiespeicherelements (11) im Laufe der Zeit umfasst.

6. Verfahren zum Betreiben nach einem der Ansprüche 3 bis 5, **dadurch gekennzeichnet, dass** die elektrische Analyse des elektrischen Signals des Elektroenergiespeicherelements (11) ein Messen der Stärke eines Stroms in dem Ladekreis der Energiespeichervorrichtung und ein Vergleichen dieser Stärke mit einem minimalen Schwellenwert und mit einem maximalen Schwellenwert umfasst.

7. Verfahren zum Betreiben nach Anspruch 1, wobei der Aktuator ein Gehäuse (50) umfasst, das mit einem Steckverbinder für ein Photovoltaikmodul versehen ist, **dadurch gekennzeichnet, dass** der Schritt des Bestimmens durch Detektieren eines Anschlusses eines Photovoltaikmoduls (20) an den Steckverbinder des Gehäuses (50) durchgeführt wird.

8. Verfahren zum Betreiben nach einem der vorhergehenden Ansprüche, **dadurch gekennzeichnet, dass** die erste Betriebsart über eine gegebene Betriebsdauer mehr automatische Betätigungen einer Verschluss-, Verdunkelungs-, Sonnenschutz- oder Abschirmungsvorrichtung (3) umfasst als die zweite Betriebsart über die gegebene Betriebsdauer.

9. Verfahren zum Betreiben nach einem der vorhergehenden Ansprüche, **dadurch gekennzeichnet, dass**:
- die erste Betriebsart automatische Betätigungen einer Verschluss-, Verdunkelungs-, Sonnenschutz- oder Abschirmungsvorrichtung (3) umfasst, um den thermischen Komfort und/oder den visuellen Komfort in einem Gebäude zu verwalten, und
- die zweite Betriebsart keine automatische Betätigung der Verschluss-, Verdunkelungs-, Sonnenschutz- oder Abschirmungsvorrichtung (3) umfasst, um den thermischen Komfort und/oder den visuellen Komfort in einem Gebäude zu verwalten.

10. Verfahren zum Betreiben nach einem der vorhergehenden Ansprüche, **dadurch gekennzeichnet, dass**:
- die erste Betriebsart einen Schritt des Auswählens einer Betätigungsgeschwindigkeit einer Verschluss-, Verdunkelungs-, Sonnenschutz- oder Abschirmungsvorrichtung (3) umfasst, und
- die zweite Betriebsart keinen Schritt des Auswählens einer Betätigungsgeschwindigkeit einer Verschluss-, Verdunkelungs-, Sonnenschutz- oder Abschirmungsvorrichtung (3) umfasst.

11. Verfahren zum Betreiben nach einem der vorhergehenden Ansprüche, wobei der Aktuator (10) ein Kommunikationselement (17) vom Typ Sender/Empfänger umfasst, **dadurch gekennzeichnet, dass**:
- die erste Betriebsart eine Aktivierung einer Funktion zur Wiederholung von Signalen durch das Kommunikationselement umfasst, und
- die erste Betriebsart keine Aktivierung einer Funktion zur Wiederholung von Signalen durch das Kommunikationselement umfasst.

12. Autonomer Aktuator (10), umfassend Hardware- und/oder Softwareelemente (11, 12, 13, 14, 15, 16, 17, 18, 19, 50, 111, 112, 114, 121, 122), die das Verfahren nach einem der Ansprüche 1 bis 11 durchführen.

13. Computerprogrammprodukt, das Programmcodeanweisungen umfasst, die auf einem computerlesbaren Medium gespeichert sind, um die Schritte des Verfahrens nach einem der Ansprüche 1 bis 11 auszuführen, wenn das Programm auf einem Computer läuft.

14. Computerlesbares Datenspeichermedium, auf dem ein Computerprogramm gespeichert ist, das Programmcodeanweisungen zur Durchführung des Verfahrens nach einem der Ansprüche 1 bis 11 umfasst.

## Claims

1. Method for operating an autonomous actuator (10) for a closing, privacy, sun protection or shielding device (3), the actuator comprising an electrical energy storage element (11), the method comprising:
- a step (E0) of determining the presence of a photovoltaic panel (20) for charging the electrical energy storage element (11),
- a step (E10) of operating the actuator in a first operating mode when a photovoltaic charging panel (20) is present and a step (E20) of operating the actuator in a second operating mode when no photovoltaic charging panel is present, the electrical energy consumption of the actuator in the first operating mode being greater than the electrical energy consumption of the actuator in the second operating mode.

2. Operating method according to the preceding claim, **characterized in that** the determination step (E0) is implemented by an action of a user on the actuator, in particular by the user entering an indicator of the presence or absence of the photovoltaic panel (20) for charging the electrical energy storage element (11).

3. Operating method according to Claim 1, **characterized in that** the determination step (E0) is implemented by an electrical analysis of an electrical signal of the electrical energy storage element (11).

4. Operating method according to Claim 3, **characterized in that** the electrical analysis of the electrical signal of the electrical energy storage element (11) comprises measuring the voltage of the electrical energy storage element (11) and comparing this voltage with a threshold.

5. Operating method according to either of Claims 3 and 4, **characterized in that** the electrical analysis of the electrical signal of the electrical energy storage element (11) comprises analysing the change in the energy capacity of the electrical energy storage element (11) over time.

6. Operating method according to one of Claims 3 to 5, **characterized in that** the electrical analysis of the electrical signal of the electrical energy storage element (11) comprises measuring the strength of a current on the circuit for charging the energy storage device and comparing this strength with a minimum threshold and with a maximum threshold.

7. Operating method according to Claim 1, the actuator comprising a casing (50) provided with a connector for a photovoltaic panel, **characterized in that** the determination step is implemented by detecting connection of a photovoltaic panel (20) to the connector of the casing (50).

8. Operating method according to one of the preceding claims, **characterized in that**, over a given operating period, the first operating mode comprises more automatic actuations of a closing, privacy, sun protection or shielding device (3) than does the second operating mode, over the given operating period.

9. Operating method according to one of the preceding claims, **characterized in that**:
- the first operating mode comprises automatic actuations of a closing, privacy, sun protection or shielding device (3) in order to manage thermal comfort and/or visual comfort in a building, and
- the second operating mode comprises no automatic actuation of the closing, privacy, sun protection or shielding device (3) in order to manage thermal comfort and/or visual comfort in a building.

10. Operating method according to one of the preceding claims, **characterized in that**:
- the first operating mode comprises a step of selecting an actuation speed of a closing, privacy, sun protection or shielding device (3), and
- the second operating mode comprises no step of selecting an actuation speed of the closing, privacy, sun protection or shielding device (3).

11. Operating method according to one of the preceding claims, the actuator (10) comprising a communication element (17) of transceiver type, **characterized in that**:
- the first operating mode comprises activation of a signal repetition function by the communication element, and
- the second operating mode comprises no activation of the signal repetition function by the communication element.

12. Autonomous actuator (10), comprising hardware and/or software elements (11, 12, 13, 14, 15, 16, 17, 18, 19, 50, 111, 112, 114, 121, 122) implementing the method according to one of Claims 1 to 11.

13. Computer program product comprising program code instructions stored on a computer-readable medium for implementing the steps of the method according to any one of Claims 1 to 11 when said program runs on a computer.

14. Computer-readable data storage medium on which is stored a computer program comprising program code instructions for implementing the method according to one of Claims 1 to 11.
